# EUROPEAN PATENT APPLICATION

(11) **EP 4 516 119 A1**
(43) Date of publication of application: **05.03.2025**
(21) Application number: 24386001.2
(22) Date of filing: 02.01.2024
(51) Int. Cl.: A23N 12/08, A23F 5/04, A23N 12/12, A23N 12/10

(54) **RAW COFFEE PROCESSING MACHINE**

(30) Priority: 01.09.2023 GR 20230100705
(71) Applicant: I.P.-CC Monoprosopi I.K.E., 57013 Thessaloniki (GR)
(72) Inventor: PAPADOPOULOS, Ioannis, Pylaia Thessaloniki, P.K. 55534 (GR)

(57) **Abstract**

This invention is a machine (Fig, 1), which processes raw (green) coffee with the use of hot air which is produced either by a gas burner or by electric resistances.

This invention consists of the raw coffee receiving silo (Fig. 2), the
roasting drum (Fig. 3), the roasting chamber, the shell collector at the back of it and the threshing floor, where the coffee cools after roasting, in its front part. The coffee roasting drum has a mixed geometry. In the lower part of the drum and, in particular, in its cylindrical part, there are small holes (Fig. 3, A). Inside it, the drum has circular-orbit stirring
paddles. At the back and bottom of the drum there are two pipes, which, when the coffee roasting process is complete, blow a quantity of ambient temperature compressed air into the drum. Finally, at the top and at the back of the mixed-geometry drum there is a pipe for exhausting the hot air, together with the smoke from the roasting and
the shells and the leftovers from the coffee processing.

## Description

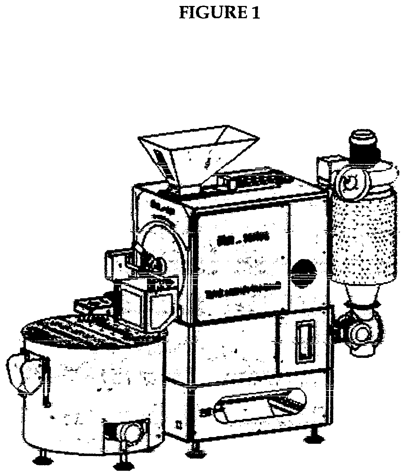

This invention is a machine (Fig. 1), which processes raw (green) coffee with the use of hot air which is produced either by a gas burner or by electric resistances.

Until today, conventional machines for processing raw coffee operate with specific standards, which include a rotating cylindrical drum, where the coffee is roasted with the use only of hot air. These machines, however, are often difficult to operate due to the rotating drum, whose result is that the cycle of roasting is a particularly tough test for the user, while due to the roasting method the final coffee product has a high content of acrylamide, an organic compound that the World, Health Organization suspects as carcinogenic and it is recommended to avoid consumption of products that contain this substance.

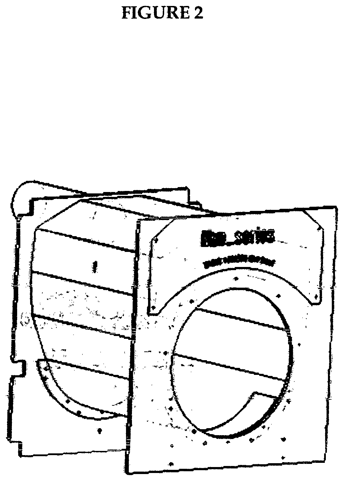

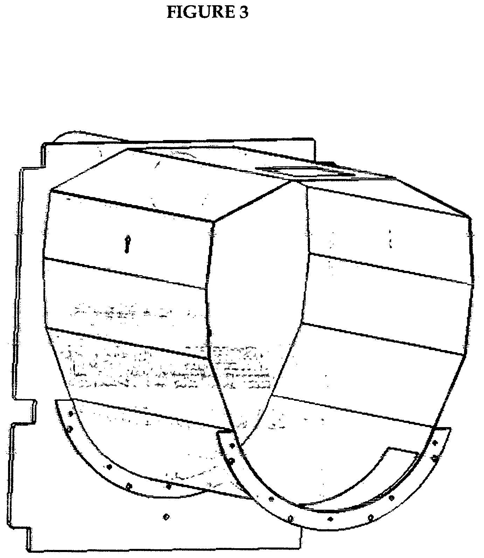

In our case, this invention consists of the raw coffee receiving silo (Fig. 2), the roasting drum (Fig. 3), the roasting chamber, the shell collector at the back of it and the threshing floor, where the coffee cools after roasting, in its front part. The coffee roasting drum has a mixed geometry, i.e. the lower part of it forms an arc and soon after it turns into a different shape (Fig. 3).

In the lower part of the drum and, in particular, in its cylindrical part, there are small holes (Fig. 3, A), so that the produced air can enter from the roasting chamber into the raw coffee processing drum. Inside it, the drum has circular-orbit stirring paddles, which stir the coffee with a tendency of 60% to the front of the drum and 40% to the back of the drum. In addition, at the back and bottom of the drum there are two pipes, which, when the coffee roasting process is complete, blow a quantity of ambient temperature compressed air into the drum. Finally, at the top and at the back of the mixed-geometry drum there is a pipe for exhausting the hot air, together with the smoke from the roasting and the shells and the leftovers from the coffee processing, to the shell collector, which is located at the back of the machine.

Compared to conventional raw coffee roasting machines, this invention bears a mixed-geometry drum for coffee processing, which contributes to the more efficient coffee roasting thanks to its different, non-circular, motion.

This invention has a roasting chamber (Fig. 3) with holes at its bottom (Fig. 3), through which hot air enters, and a large exhaust pipe on the top and at the back of its mixed geometry, which makes its handling easier during the roasting cycle, that usually lasts 20 minutes.

This invention can also roast coffee with compressed ambient air, which enters the drum, in addition to the heat used in conventional coffee roasters, so it makes roasting more efficient, while thanks to this possibility, the roasted coffee has better chemical characteristics and, to be more specific, has lower acrylamides, and therefore the coffee, processed by this invention, is more beneficial for consumption.

## Claims

1. This invention is a machine (Fig. 1), which processes raw (green) coffee with the use of hot air which is produced either by a gas burner or by electric resistances.

2. Machine for processing raw coffee, according to Claim 1, which has mixed-geometry drum for coffee processing, that contributes to a more efficient coffee roasting, thanks to its different, non-circular motion.

3. Machine for processing raw coffee, according to Claim 1, that has a roasting chamber (Fig. 3) with holes in its bottom (Fig. 3), through which hot air enters, and a large exhaust pipe at the top and at the back of its mixed geometry, which makes its handling easier during the roasting cycle, that usually lasts 20 minutes.

4. Machine for processing raw coffee according to Claim 1, which can also roast the coffee with compressed ambient air, which enters the drum, in addition to the heat used in conventional coffee roasters, so it makes roasting more efficient.

5. Machine for processing raw coffee, according to Claim 1, which, due to the insertion of compressed ambient air into the drum, results in the better chemical characteristics of the roasted coffee and, in particular, in its tower acrylamides, and therefore the coffee processed by this invention is more beneficial for consumption.
